Europäisches Patentamt

(19) European Patent Office

Office européen des brevets

(11) Publication number: **0 125 842**
**B1**

(12) **EUROPEAN PATENT SPECIFICATION**

(45) Date of publication of patent specification: **08.08.90**

(21) Application number: **84303001.6**

(22) Date of filing: **03.05.84**

(51) Int. Cl.⁵: **G 06 F 3/02, G 06 F 15/02**

(54) **Data stored display device, e.g. a wrist watch.**

(30) Priority: **06.05.83 JP 79794/83**
**06.05.83 JP 79795/83**
**06.05.83 JP 79796/83**

(43) Date of publication of application:
**21.11.84 Bulletin 84/47**

(45) Publication of the grant of the patent:
**08.08.90 Bulletin 90/32**

(84) Designated Contracting States:
**CH DE GB LI**

(56) References cited:
**US-A-4 130 738**
**US-A-4 320 387**

**IEEE Standard Dictionary of Electrical and
Electronics Terms, ANSI/IEEE Std 100-1977,
New York, NY, 1978**

(73) Proprietor: **SEIKO INSTRUMENTS INC.**
**31-1, Kameido 6-chome Koto-ku**
**Tokyo 136 (JP)**

(72) Inventor: **Asano, Kazuhiro**
**Kabushiki Kaisha Daini Seikosha 6-31-1 Kameido
Koto-ku Tokyo (JP)**
Inventor: **Yoshida, Yosuke**
**Kabushiki Kaisha Daini Seikosha 6-31-1 Kameido
Koto-ku Tokyo (JP)**
Inventor: **Fujioka, Youichi**
**Kabushiki Kaisha Daini Seikosha 6-31-1 Kameido
Koto-ku Tokyo (JP)**
Inventor: **Takazawa, Kazuhisa**
**Kabushiki Kaisha Daini Seikosha 6-31-1 Kameido
Koto-ku Tokyo (JP)**
Inventor: **Ishizaki, Masao**
**Kabushiki Kaisha Daini Seikosha 6-31-1 Kameido
Koto-ku Tokyo (JP)**
Inventor: **Sakami, Yasuo**
**Kabushiki Kaisha Daini Seikosha 6-31-1 Kameido
Koto-ku Tokyo (JP)**
Inventor: **Tsubouchi, Junichi**
**Kabushiki Kaisha Daini Seikosha 6-31-1 Kameido
Koto-ku Tokyo (JP)**

Courier Press, Leamington Spa, England.

**EP 0 125 842 B1**

(74) Representative: **Caro, William Egerton et al J. MILLER & CO. Lincoln House 296-302 High Holborn London WC1V 7JH (GB)**

## Description

This invention relates to data stored display devices such as, for example, wrist watches and, more particularly, although not so restricted, to data stored display devices where it is possible to edit data to be memorised by an external controller such as a computer.

Recently, a data stored display device having a plurality of key switches for inputting data so that it acts as a memo has been put on the market. However, it is inconvenient that the conventional data stored display device has either key switches for inputting data, or needs a connector, such as a cable, to connect it to an external controller for inputting memo data into the data stored display device from the latter.

It is difficult to make the conventional data stored display device of small size and to be waterproof because of the key switches or the connector. It is also disadvantageous that there is an electrical connection between the conventional data stored display device and the external controller because the connector is apt to rust and it is difficult to handle the connector when it is connected between the data stored display device and the external computer.

US—A—4,320,387 discloses a data stored display device comprising an acoustical transducer with a coupling diaphragm mechanically coupled to a driver and to a sensor for transmitting and receiving control and data signals to and from the outside. A central processing unit for generating control signals according to a program stored in a read only memory and to control signals from outside, a storage memory unit for storing data received and permitting access thereto, display elements for displaying data stored in the storage memory unit, a demodulator unit for demodulating data and control signals tansmitted from outside, a modulating unit for modulating data and control signals to be transmitted outside, and a switch for requesting the central processing unit to display data stored in the storage memory unit.

US—A—4,130,738 discloses a bi-directional data transfer and storage system, in which a portable random access memory unit is incorporated into a wrist watch. The wrist watch has separate transmitting and receiving coils which can be inductively coupled to a telephone handset containing receiving and transmitting coils. The coils are tuned by a tuning capacitor in parallel. The coils and display means are adjacent the front face of the wrist watch, so that when the wrist watch is applied to the earpiece of the telephone handset to effect inductive coupling, the display is rendered invisible.

According to one aspect of the present invention there is provided a data store display device comprising transmitting and receiving means for transmitting and receiving data, memory means for storing written in and read out data, display means for displaying data stored in said memory means, a central processing unit for generating control signals according to a control program stored in a second memory means and control signals from outside the device, the transmitting and receiving means having a common coil for transmitting data and control signals to the outside and for receiving data and control signals from outside, with a capacitor connected in parallel with the coil, demodulating means for demodulating signals inductively generated in the coil in response to data and control signals transmitted from outside, modulating means for modulating data and control signals into electrical signals for the coil to transmit outside, and switching means responsive to signals from the central processing unit to activate the demodulating means to demodulate data and control signals received from outside or to activate the modulating means to modulate data and control signals to be transmitted to outside, and second switching means for requesting the central processing unit to display data stored in the memory means, and display control means connected to the central processing unit to generate display control signals representative of said data to control the display means responsive thereto, and having a casing with a front face and a rear face spaced from each other, the display means being disposed adjacent the front face and the common coil being disposed adjacent the rear face.

Another aspect of the present invention consists of the combination of such a data stored display device with an external controller for transmitting to, and receiving from, the device data and control signals, the controller comprising a keyboard for entering data to be transmitted to the device, a second central processing unit for generating control signals according to a control program stored in a first controller memory means and control signals from outside, controller transmitting and receiving means including a controller common coil for transmitting and receiving data and control signals to and from the outside, with a capacitor connected in parallel with the controller coil, controller modulating means for modulating data and control signals into electrical signals for the controller coil to transmit outside, controller demodulating means for demodulating signals inductively generated in the controller coil in response to data and control signals transmitted from outside, and controller switching means responsive to signals from the controller central processing unit to activate the controller modulating means to modulate data and control signals to be transmitted outside or to activate the controller demodulating means to demodulate data and control signals received from outside, a second controller memory means for storing data received, and a holder accommodating therein the controller coil and adapted to receive the device with the rear face thereupon, so that the coils of the device and controller are closely electro-magnetically coupled and the display means is readily visible.

The invention is illustrated, merely by way of example, in the accompanying drawings, in which:—

Figure 1A is an exterior view of a wrist watch serving as a data stored display device according to the present invention and an external controller for inputting memo data into the wrist watch;

Figure 1B is an exterior view of the wrist watch of Figure 1A and another form of external controller;

Figure 2 is a block diagram of circuitry of the external controller of Figure 1A;

Figure 3 is a block diagram of circuitry of one embodiment of a transmitting and receiving circuit of the external controller of Figure 2;

Figure 4 is a block circuit diagram of the wrist watch of Figures 1A and 1B;

Figure 5 is a flow diagram showing a mode-changing operation of the wrist watch of Fgiures 1A and 1B;

Figure 6 is a circuit diagram showing one embodiment of an interface section shown in Figure 3;

Figures 7 and 8 are waveforms explaining the operation of the interface section of Figure 6;

Figure 9A is a sectional view showing the internal construction of the wrist watch of Figure 1A;

Figure 9B is a sectional view showing an alternative internal construction of the wrist watch of Figure 1A; and

Figures 10A and 10B and 10C are flow charts showing the relationships between the external controller and the wrist watch of Figure 1A.

Throughout the drawings like parts have been designated by the same reference numerals.

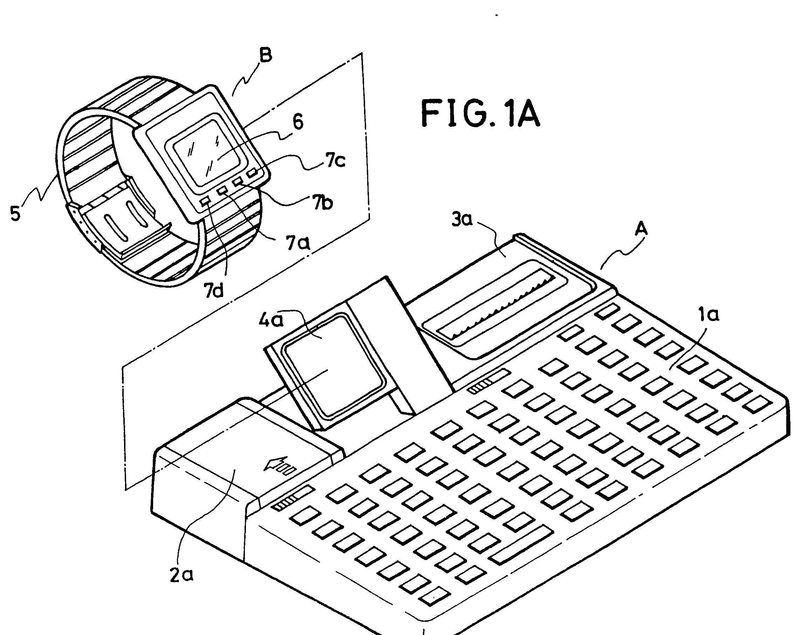

Referring now to the drawings, Figure 1A is an exterior view of a wrist watch B serving as a data stored display device according to the present invention and an external controller A for inputting memo data into the wrist watch. The wrist watch B has a wrist band 5, a liquid crystal display panel 6, button switches 7a, 7b, 7c, 7d, and a transmitting and receiving coil (not shown).

The external controller A has a keyboard 1a, a receptacle 2a for receiving a read only memory (ROM) pack serving as an external memory, a printer 3a and a resilient holder 4a movable to an angled position shown and having a magnetic (electromagnetic) transmitter for transmitting and receiving data. The holder 4a also has a transmitting and receiving coil (not shown) for cooperation with that of the wrist watch B.

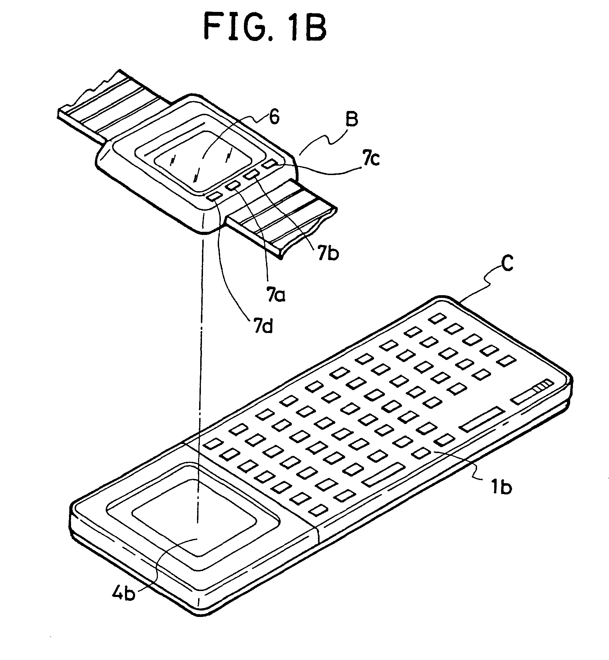

Figure 1B is an exterior view of the wrist watch B and another form of external controller C. The external controller C has a keyboard 1b, a holder 4b including a transmitting and receiving coil similar to that of the holder 4a in Figure 1A.

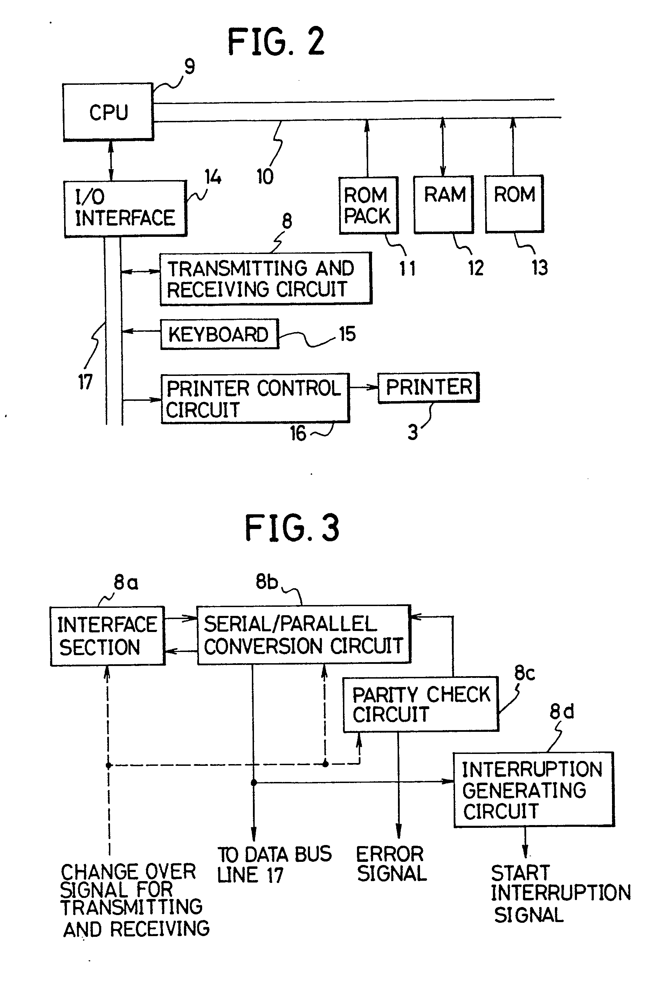

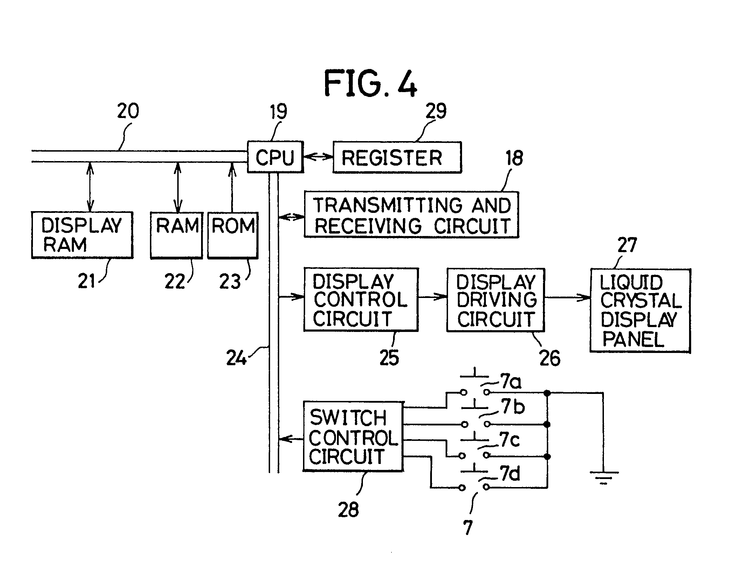

Referring next to Figure 4, there is shown the circuitry of the wrist watch B. The wrist watch B has a transmitting and receiving circuit 18 for transmitting and receiving data magnetically transmitted between the wrist watch B and the external controller A. The transmitting and receiving circuit 18 has the construction shown in Figure 3 which will be described later.

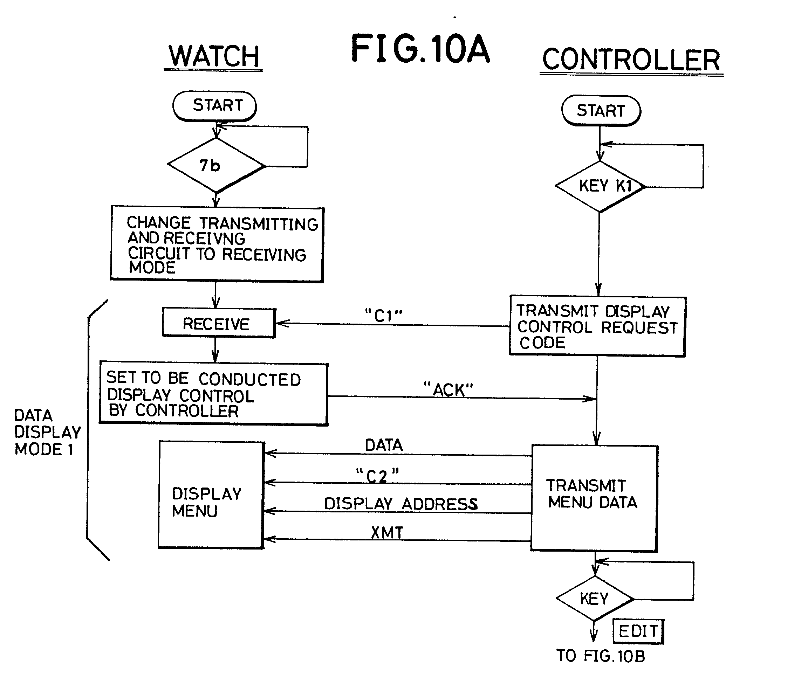

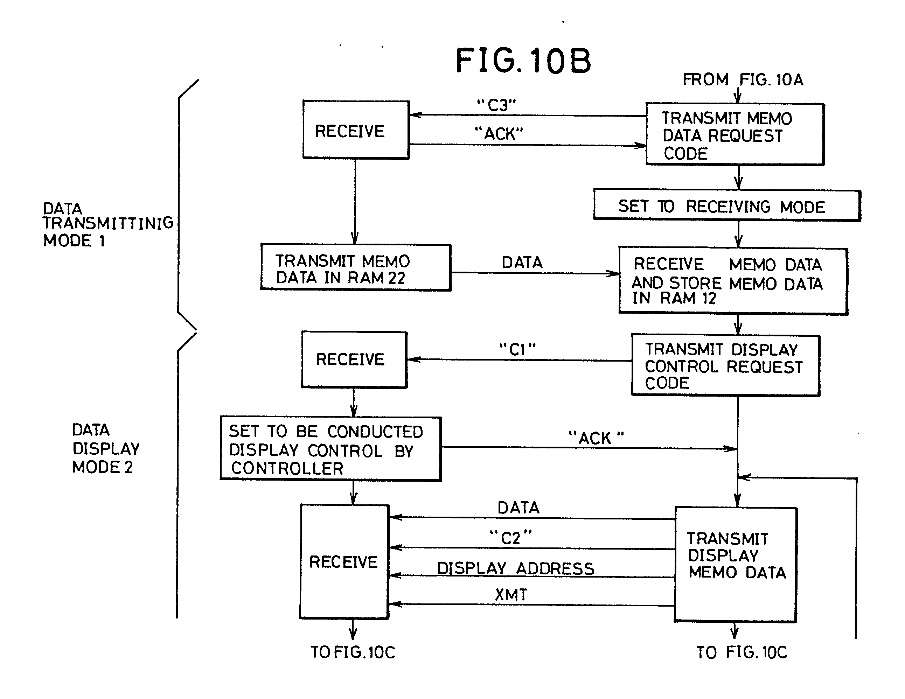

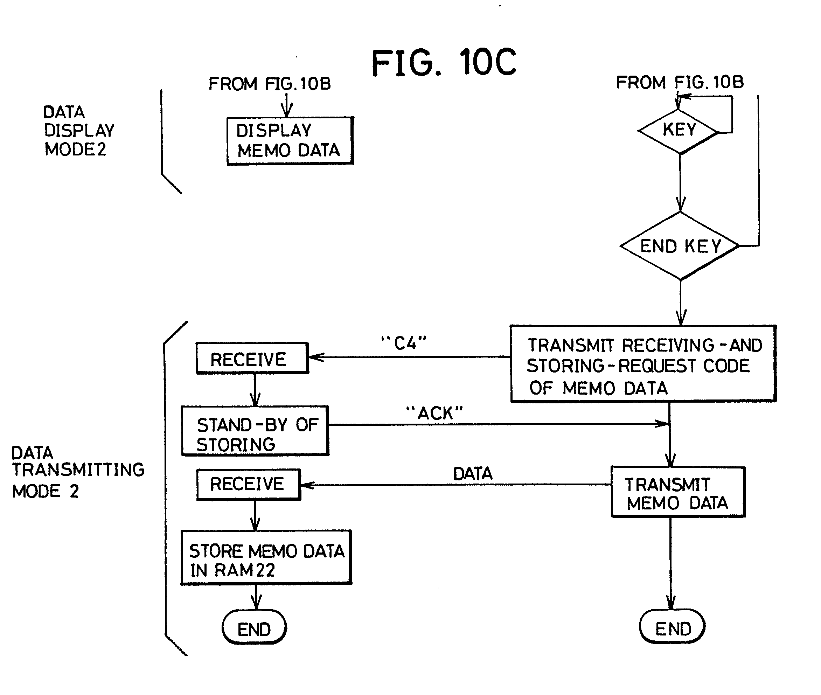

The wrist watch also has a central processing unit (CPU) 19 which is connected through an address data bus line 20 to a display random access memory (RAM) 21 for storing display data temporarily, a random access memory (RAM) 22 for storing utility programs and memo data and a read only memory (ROM) 23 for storing a control program. The CPU 19 is connected through an input/output (I/O) bus line 24 to the transmitting and receiving circuit 18 and is constructed so as to execute programs stored in the ROM 23 and to control all circuits with a control signal such as codes $C_1$, $C_2$, $C_3$, $C_4$ described in Figures 10A, 10B, 10C inputted to the transmitting and receiving circuit 18. A display control circuit 25 is connected to the I/O bus line 24. The display control 25 is constructed so as to output data read from the RAMs 21, 22 through the CPU 19 and a display driving circuit 26 to a liquid crystal display panel 27.

A switch control circuit 28 outputs a control signal through the I/O bus line 24 to the CPU 19 upon operation of the button switches 7a, 7b, 7c, 7d.

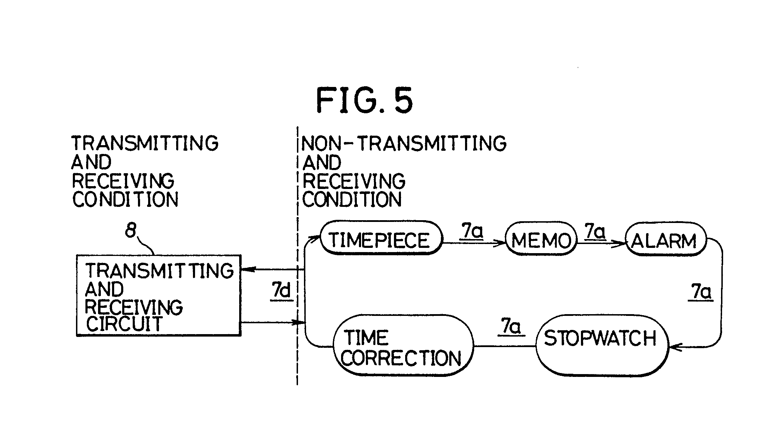

In response to the operation of the button switch 7a, the switch control circuit changes the function of the wrist watch cyclically through a timepiece mode, a memo mode, an alarm mode, a stopwatch mode and a time correction mode as shown in Figure 5. The button switch 7b serves as a standby switch for changing from a non-transmitting and receiving mode to a transmitting and receiving mode. The button switch 7c serves as a selection switch for selecting a time unit for correction in the time correction mode, as a shift switch for shifting displayed data in an upper direction in the memo mode, and as a start-stop switch in the stop watch mode. The button switch 7d serves as a set switch for setting time in the time correction mode and as a shift switch for shifting display data in a lower direction in the memo mode. A register 29 is connected to the CPU 19.

Figure 2 is a block diagram of the circuitry of the external controller A. The external controller A has a transmitting and receiving circuit 8 for transmitting and receiving data magnetically between the wrist watch B and the controller A.

As shown in Figure 3, the transmitting and receiving circuit 8 consists of an interface section 8a for transmitting and receiving data magnetically, a serial/parallel conversion circuit 8b for converting a serial signal received at the interface section 8a to a parallel signal and outputting the parallel signal to a data bus line 17, a parity check circuit 8c for outputting an error signal to a central processing unit 9 after detecting parity of the parallel signal outputted from the serial/parallel conversion circuit 8b and for adding a parity bit to the parallel signal inputted from the data bus line, and an interruption generating circuit 8d for interrupting the CPU dependent upon detecting an interruption signal from the signals outputted on the data bus line 17 from the conversion circuit 8b. Each circuit is constructed to be able to change over from a transmitting mode to a receiving mode and vice versa under a control signal from the CPU.

Referring back to Figure 2, the CPU 9 is connected to a read only memory (ROM) pack 11 storing utility programs through an address data bus line 10, a random access memory (RAM) 12 and a read only memory (ROM) 13 storing a control program. The CPU 9 is connected to the transmitting and receiving circuit 8, a keyboard 15, and a printer control circuit 16 through an input/output (I/O) interface 14.

The CPU 9 is constructed to execute a program stored in each of the RAM 12 and the ROM 13 and to output data on an input/output (I/O) bus line 17 to the wrist watch via the transmitting and receiving circuit 8.

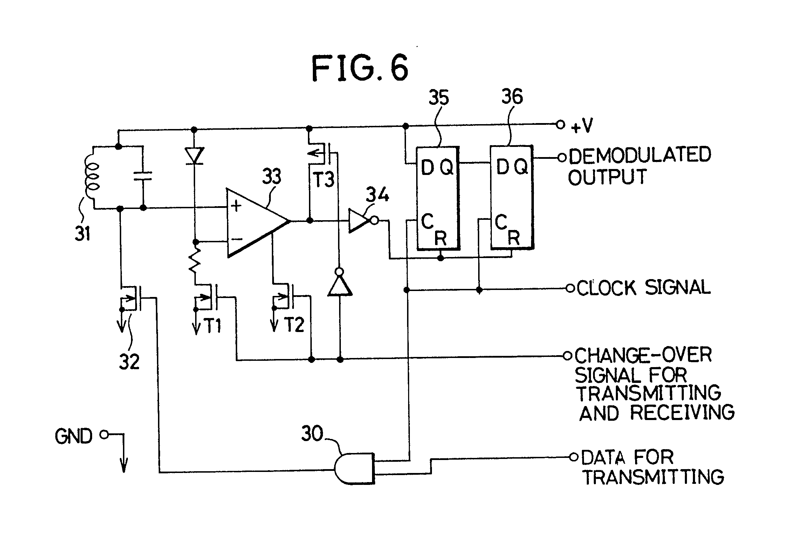

Figure 6 is a circuit diagram of the interface section 8a which comprises a transmitter system having an AND gate 30 for receiving data for transmission and a clock signal, a switching transistor 32 for selectively providing an output to a transmitting and receiving coil 31 in response to the output of the AND gate 30, a receiver system having a pulse shaping circuit 33 for wave shaping a signal from the transmitting and receiving coil 31, D-type flip flops 35, 36 for demodulating to a H-L signal synchronized with the clock signal and for inputting the output signal of the pulse shaping circuit 33 through an inverter 34 to the reset terminal of the D-type flip flops. Each of the reference characters $T_1$, $T_2$, $T_3$ is a switching transistor for changing the interface section 8a from a transmitting mode to a receiving mode and vice versa. The switching transistors $T_1$, $T_2$, $T_3$ are controlled by a change-over signal for transmitting and receiving.

The operation of the wrist watch B and the external controller will be described with reference to Figure 10A, 10B and 10C, which are flow charts for inputting edited data to the wrist watch B by using the external controller A. These flow charts consists of [Data Display Mode 1], [Data Transmitting Mode 1], [Data Display Mode 2] and [Data Transmitting Mode 2]. When the button switch 7b of the wrist watch B is depressed, the transmitting and receiving circuit 18 goes to the receiving mode. When a key $K_1$ for inputting and editing data is depressed, the wrist watch B and the controller A go to the [Data Display Mode 1] as shown in Figure 10A.

[Data Display Mode 1]

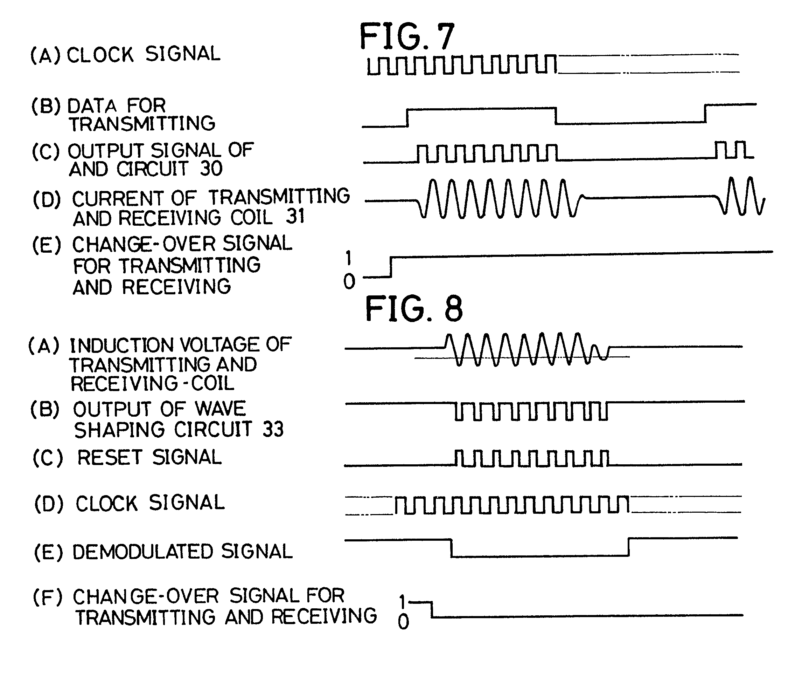

Code $C_1$ produced by the depression of the key $K_1$ is converted to a serial signal by the transmitting and receiving circuit 8 (as shown by waveform (B) of Figure 7) and is transmitted as magnetic flux from the coil 31 of the transmitting and receiving circuit 8 to the wrist watch B (as shown by waveform (D) of Figure 7). The magnetic flux is detected by the coil of the transmitting and receiving circuit 18 of the wrist watch B and an electrical signal (as shown by waveform (A) of Figure 8) is induced and this electrical signal is demodulated by the pulse shaping circuit 33 and flip flops 35 and 36 to a space-mark demodulated signal synchronized with a clock signal (as shown by waveform (E) of Figure 8).

This demodulated signal is converted to a parallel signal in the serial/parallel conversion circuit 8b and the parallel signal is inputted through the data bus line 24 to the CPU 19. The CPU 19 goes into a stand-by condition of the receiving mode after receiving the code $C_1$. The CPU 19 transmits an acknowledge response code ACK through the transmitting and receiving circuit 18 to the external controller A after the stand-by condition of the receiving mode. At this stage, the external controller sends the top address of data to be stored in the RAM 21 so as to set the stored address. After the above stage, the data produced by the data processing process is sent from the RAM 12 of the external controller to the wrist watch, when the data processing process is executed in the external controller A.

When the sending of the data is completed, a data separate code $C_2$ is sent to the wrist watch B together with the display address of the data for causing a display on the liquid crystal display panel 27 to flash.

When the sending of all the above data (including menu data of Figure 10A) is completed, a transmitting end control code XMT is sent to the wrist watch B from the external controller A.

[Data Transmitting Mode 1]

The external controller sends code $C_3$ to the wrist watch B in response to the depression of a key for editing data. The CPU 19 goes into the stand-by condition of the receiving mode after receiving the code $C_3$. The CPU 19 transmits the acknowledge response code ACK through the transmitting and receiving circuit 18 to the external controller. The wrist watch transmits data (corresponding to 1,000 characters) in the RAM 22 directly to the RAM 12 of the external controller A.

The operation between the wrist watch B and the external controller A than becomes [Data Display Mode 2]. At this time, the liquid crystal display panel 27 of the wrist watch functions as a display of the external controller A. That is, the content of a key for memo data of the external controller A is displayed on the display panel 27.

When an end-key is depressed in the external controller, the operation between the wrist watch B and the controller A becomes [Data Transmitting Mode 2]. Code $C_4$ is transmitted from the external controller to the wrist watch. At a time when the receiving mode is completed, the CPU 19 is interrupted by the interruption generating circuit 8d. As a result, the CPU 19 checks whether the received data has an error or not. After this check, the CPU 19 transmits the acknowledge response code ACK if the received data has no error. The external controller sends the top address of the RAM 22 which designates the location to store the data of the RAM 12 in the RAM 22. Then, the memo data in the RAM 12 of the external controller is transmitted directly to the RAM 22 so that the memo data is stored in the RAM 12.

In the case where a wearer of the wrist watch B wishes to see the memo data in the RAM 12 he selects the memo mode by operation of the button switch 7a. Then, he can see the memo data in the RAM 12 by operation of the button switches 7c and 7d.

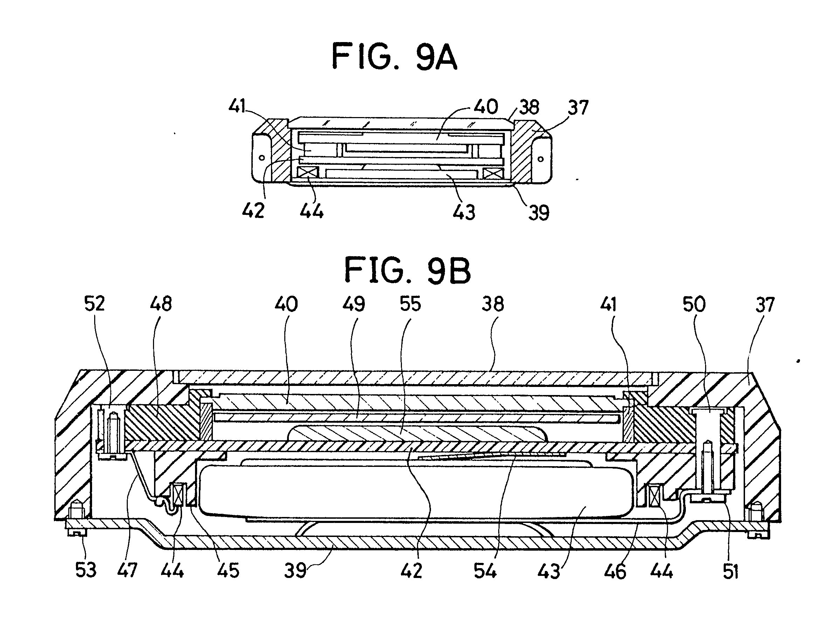

Figure 9A is a sectional view showing the construction of the wrist watch B. The wrist watch B has a case 37 forming a housing with a caseback 39 and a glass 38. The housing includes a liquid crsytal display panel 40 arranged adjacent to the glass 38, a circuit board 42 including a signal processing circuit connected through a connector 41 to the liquid crystal display panel 40, a battery 43 for providing power between the circuit board 42 and the caseback 39, and a transmitting and receiving coil 44 surrounding the periphery of the battery 43 for transmitting and receiving data between the external controller and the wrist watch.

Figure 9B is a sectional view showing an alternative construction of the wrist watch B. The transmitting and receiving coil 44 surrounds a battery frame 45 for positioning the battery 43 and is connected thorugh a coil lead 47 to the circuit board 42 with a set screw 53 fixed to a screw pin 52. A seal 55 is mounted on the circuit board 42 which is disposed between the liquid crystal display panel 40 and the battery 43. To connect electrically the liquid crystal display panel 40 and the circuit board 42, a conductive connector 41 is used and serves to support the liquid crystal display panel 40.

A panel frame 48 also serves to support the liquid crystal display panel 40 and a reflection plate 49. The battery 43 is supported by battery bridles 46, 54, the battery bridle 46 being fixed to a screw pin 50 by a set screw 52. The screw pin 50 is fixed through the circuit board 42 to the case 37 which holds the caseback 39 made of stainless steel and the plate 38.

As shown in Figures 9A and 9B, the transmitting and receiving coil 44 is inside the wrist watch so that the wrist watch may be made waterproof.

The data stored display devices according to the present invention and described above are not only of small size and can be made waterproof but also are portable, because no physical connection is provided between the data stored display devices and the external controller.

**Claims**

1. A data stored display device comprising transmitting and receiving means (18) for transmitting and receiving data, memory means (21) for storing written in and read out data, display means (27) for displaying data stored in said memory means, a central processing unit (19) for generating control signals according to a control program stored in a second memory means (23) and control signals from outside the device, the transmitting and receiving means (18) having a common coil (31; 44) for transmitting data and control signals to the outside and for receiving data and control signals from outside, with a capacitor connected in parallel with the coil, demodulating means (33, 35, 36) for demodulating signals inductively generated in the coil (31; 44) in response to data and control signals transmitted from outside, modulating means (30) for modulating data and control signals into electrical signals for the coil to transmit outside, and switching means (32, T1, T2, T3) responsive to signals from the central processing unit (19) to activate the demodulating means to demodulate data and control signals received from outside or to activate the modulating means to modulate data and control signals to be transmitted to outside, and second switching means (7, 28) for requesting the central processing unit (19) to display data stored in the memory means (21), and display control means (25, 26) connected to the central processing unit (19) to generate display control signals representative of said data to control the display means (27) responsive thereto, and having a casing (37) with a front face (38) and a rear face (39) spaced from each other, the display means (27) being disposed adjacent the front face (38) and the common coil (44) being disposed adjacent the rear face (38).

2. A device as claimed in claim 1, including a time generating means for generating actual time information.

3. A device as claimed in claim 2, including means for storing generated actual time information in the memory means (21).

4. A device as claimed in claim 2 or 3, including a mode switch for effecting display of the actual time.

5. A device as claimed in any preceding claim, including a stand-by switch (7b) to control activation of the transmitting and receiving means.

6. A device as claimed in any preceding claim, including an electrical battery (43) disposed inside the casing (37) and surrounded by the common coil (44).

7. The combination of a device as claimed in any preceding claim, and an external controller (A; C) for transmitting to, and receiving from, the device (B) data and control signals, the controller comprising a keyboard (1a; 1b) for entering data to be transmitted to the device, a second central processing unit (9) for generating control signals according to a control program stored in a first controller memory means (13) and control signals from outside, controller transmitting and receiving means (8) including a controller common coil (31) for transmitting and receiving data and control signals to and from the outside, with a capacitor connected in parallel with the controller coil, controller modulating means for modulating data and control signals into electrical signals for the controller coil to transmit outside, controller demodulating means for demodulating signals inductively generated in the controller coil in response to data and control signals transmitted from outside, and controller switching means responsive to signals from the controller central processing unit (9) to activate the controller modulating means to modulate data and control signals to be transmitted outside or to activate the controller demodulating means to demodulate data and control signals received from outside, a second controller memory means (12) for storing data received, and a holder (4a; 4b) accommodating therein the controller coil and adapted to receive the device (B) with the rear face (39) thereupon, so that the coils of the device and controller are closely electromagnetically coupled and the display means (6; 27) is readily visible.

## Patentansprüche

1. Datenspeichernde Anzeigeeinrichtung mit einer Sende- und Empfangsanordnung (18) zum Senden und Empfangen von Daten, einer Speicheranordnung (21) zum Speichern von Einschreib- und Auslesedaten, einer Anzeigeanordnung (27) zur Anzeige von in der Speicheranordnung gespeicherten Daten, einer zentralen Verarbeitungseinheit (19) zur Erzeugung von Steuersignalen gemäß einem in einer zweiten Speicheranordnung (23) gespeicherten Steuerprogramm und Steuersignalen von außerhalb der Einrichtung, einer gemeinsamen Spule (31; 44) für die Sende- und Empfangsanordnung (18) zum Aussenden von Daten und Steuersignalen nach außen sowie zur Aufnahme von Daten und Steuersignalen von außen, einem parallel zur Spule liegenden Kondensator, einer Demodulatoranordnung (33, 35, 36) zum Demodulieren von induktiv in der Spule (31; 44) erzeugten Signalen als Funktion der von außen gesendeten Daten und Steuersignalen, einer Modulatoranordnung (30) zum Modulieren von Daten und Steuersignalen in elektrische Signale für die Spule zwecks Sendens nach außen, einer von Signalen von der zentralen Verarbeitungseinheit (19) angesteuerten Schalteranordnung (32, T1, T2, T3) zur Aktivierung der Demodulatoranordnung für das Demodulieren von von außen empfangenen Daten und Steuersignalen oder zur Aktivierung der Modulatoranordnung für das Modulieren von nach außen zu sendenden Daten und Steuersignalen, einer zweiten Schalteranordnung (7, 28) zur Anforderung einer Anzeige von in der Speicheranordnung (21) gespeicherten Daten von der zentralen Verarbeitungseinheit (19), einer an die zentrale Verarbeitungseinheit (19) angeschlossenen Anzeigesteueranordnung (25, 26) zur Erzeugung von die Daten repräsentierenden Anzeigesteuersignalen zwecks entsprechender Steuerung der Anzeigeanordnung (27), mit einem Gehäuse (37) mit einer Vorderseite (38) und einer Rückseite (39) die voneinander beabstandet sind, einer Anordnung der Anzeigeanordnung (27) im Bereich der Vorderseite (38) und einer Anordnung der gemeinsamen Spule (44) im Bereich der Hinterseite (38).

2. Einrichtung nach Anspruch 1 mit einem Zeitgeber zur Erzeugung von Istzeitinformation.

3. Einrichtung nach Anspruch 2 mit einer Anordnung zur Einspeicherung erzeugter Istzeitinformation in die Speicheranordnung (21).

4. Einrichtung nach Anspruch 2 oder 3 mit einem Betriebsartschalter zur Realisierung einer Anzeige der Istzeit.

5. Einrichtung nach den vorhergehenden Ansprüchen mit einem Bereitschaftsschalter (7b) zur Steuerung der Aktivierung der Sende- und Empfangsanordnung.

6. Einrichtung nach den vorhergehenden Ansprüchen mit einer innerhalb des Gehäuses (37) angeordneten und von der gemeinsamen Spule (44) umgebenen elektrischen Batterie (43).

7. Kombination einer Einrichtung nach den vorhergehenden Ansprüchen und einer externen Steuerung (A; C) zum Aussenden und Empfangen von Daten und Steuersignalen zur bzw. von der Einrichtung (B) mit folgenden Komponenten der Steuerung: eine Tastatur (1a; 1b) zur Eingabe von zur Einrichtung zu sendenden Daten, eine zweite zentrale Verarbeitungseinheit (9) zur Erzeugung von Steuersignalen gemäß einem in einer ersten Steuerspeicheranordnung (13) gespeicherten Steuerprogramm und Steuersignalen von außerhalb, eine Steuerungs-Sende- und Empfangsanordnung (8) mit einer gemeinsamen Steuerungsspule (31) zum Senden und Empfangen von Daten und Steuersignalen nach außen bzw. von außen, einen parallel zur Steuerungsspule geschalteten Kondensator, eine Steuerungsmodulatoranordnung zum Modulieren von Daten und Steuersignalen in elektrische Signale für die Steuerungsspule zwecks Sendens nach außen, eine Steuerungsdemodulatoranordnung zum Demodulieren von als Funktion von von außen gesendeten Daten und Steuersignalen induktiv in der Steuerungsspule erzeugten Signalen eine von Signalen von der zentralen Verarbeitungseinheit (9) der Steuerung angesteuerte Steuerungsschalteranordnung zur Aktivierung der Steuerungsmodulatoranordnung für das Modulieren von nach außen zu sendenden Daten und Steuersignalen oder zur Aktivierung in der Steuerungsdemodulatoranordnung für das Demodulieren von von außen empfangenen Daten und Steuersignalen, eine zweite Steuerungsspeicheranordnung (12) zur Speicherung von empfangenen Daten und einen die Steuerungsspule aufnehmenden und zur Aufnahme der Einrichtung (B) mit der Hinterseite (39) dienenden Halter (4a, 4b), so daß die Spulen der Einrichtung und der Steuerung elektromagnetisch festgekoppelt sind und die Anzeigeanordnung (6; 27) gut sichtbar ist.

## Revendications

1. Dispositif d'affichage à mémoire d'information comprenant des moyens (18) pour transmettre et recevoir des données, des moyens de mémorisation (21) pour mémoriser des données enregistrées et retirées de la mémoire, des moyens d'affichage (27) pour afficher des données mémorisées dans lesdits moyens de mémorisation, une unité centrale de traitement (19) pour générer des signaux de commande selon un programme de commande mémorisé dans des seconds moyens de mémorisation (23) et des signaux de commande de l'extérieur du dispositif, les moyens de transmission et de réception (18) ayant une bobine commune (31; 44) pour transmettre des données et des signaux de commande à l'extérieur et pour recevoir des données et des signaux de commande de l'extérieur, avec un condensateur connecté en parallèle avec la bobine, des moyens de démodulation (33, 35, 36) pour démoduler des signaux générés inductivement dans la bobine (31; 44) en réponse à des données et signaux de commande transmis de l'extérieur, des moyens de modulation (30) pour moduler des données et signaux de commande en signaux électriques pour la bobine à transmettre à l'extérieur, et des moyens de commutation (32, T1, T2, T3) répondant à des signaux de l'unité centrale de traitement (19) pour activer les moyens de démodulation pour démoduler des données et signaux de commande reçus de l'extérieur ou pour activer les moyens de modulation pour moduler des données et signaux de commande à transmettre à l'extérieur, et des seconds moyens de commutation (7, 28) pour demander à l'unité centrale de traitement (19) d'afficher des données mémorisées dans les moyens de mémorisation (21) et des moyens de commande d'affichage (25, 26) connectés à l'unité centrale de traitement (19) pour générer des signaux de commande de l'affichage représentatifs desdites données pour commander les moyens d'affichage (27) en réponse à celles-ci, et ayant un boîtier (37) avec une face frontale (38) et une face arrière (39) espacées l'une de l'autre, les moyens d'affichage (27) étant disposés adjacent à la face frontale (38) et la bobine commune (44) étant disposée adjacent à la face arrière (38).

2. Dispositif selon la revendication 1, comprenant des moyens générateurs de temps pour générer des informations en temps réel.

3. Dispositif selon la revendication 2, comprenant des moyens pour mémoriser dans les moyens de mémoire (21) les informations générées en temps réel.

4. Dispositif selon la revendication 2 ou 3, comprenant un interrupteur de mode pour effectuer l'affichage du temps réel.

5. Dispositif selon l'une quelconque des revendications précédentes, comprenant un interrupteur de préparation (7b) pour commander l'activation des moyens de transmission et de réception.

6. Dispositif selon l'une quelconque des revendications précédentes, comprenant une batterie électrique (43) disposée à l'intérieur du boîtier (37) et entourée par la bobine commune (44).

7. Combinaison d'un dispositif selon l'une quelconque des revendications précédentes et d'un contrôleur extérieur (A; C) pour transmettre au dispositif (B) et recevoir de celui-ci des données et signaux de commande, le contrôleur comprenant un clavier (1a; 1b) pour entrer des données à transmettre au dispositif, une seconde unité centrale de traitement (9) pour générer des signaux de commande selon un programme de commande mémorisé dans des premiers moyens de mémoire de contrôleur (13) et des signaux de commande de l'extérieur, des moyens de transmission et de réception de contrôleur (8) comprenant une bobine commune de contrôleur (31) pour transmettre à l'extérieur et recevoir de l'extérieur des données et signaux de commande, avec un condensateur connecté en parallèle avec la bobine de contrôleur, des moyens de modulation de contrôleur pour moduler des données et signaux de commande en signaux électrique pour être transmis à l'extérieur par la bobine de contrôleur, des moyens de démodulation de contrôleur pour démoduler des signaux générés inductivement dans la bobine de contrôleur en réponse à des données et signaux de commande transmis de l'extérieur, et une unité centrale de traitement de contrôleur (9) pour activer les moyens de modulation de contrôleur afin de moduler des données et signaux de commande à transmettre à l'extérieur ou pour activer les moyens de démodulation de contrôleur afin de démoduler des données et signaux de commande reçus de l'extérieur, des seconds moyens de mémoire de contrôleur (12) pour mémoriser des données reçues, et un porteur (4a; 4b) à l'intérieur duquel la bobine de contrôleur est logée, adapté pour recevoir le dispositif (B) avec la face arrière (39) posée dessus, de sorte que les bobines du dispositif et du contrôleur sont couplées électromagnétiquement de manière serrée et que les moyens d'affichage (6; 27) sont facilement visibles.

FIG.1A

EP 0 125 842 B1

# FIG. 1B

# FIG. 2

# FIG. 3

# FIG. 4

EP 0 125 842 B1

# FIG. 5

TRANSMITTING
AND
RECEIVING
CONDITION

NON-TRANSMITTING
AND
RECEIVING
CONDITION

8

| TRANSMITTING<br>AND<br>RECEIVING<br>CIRCUIT |

7d

TIMEPIECE → 7a → MEMO → 7a → ALARM

7a

TIME
CORRECTION ← 7a ← STOPWATCH

EP 0 125 842 B1

# FIG.6

DEMODULATED OUTPUT

+V

CLOCK SIGNAL

CHANGE-OVER SIGNAL FOR TRANSMITTING AND RECEIVING

DATA FOR TRANSMITTING

GND

EP 0 125 842 B1

## FIG. 7

(A) CLOCK SIGNAL

(B) DATA FOR TRANSMITTING

(C) OUTPUT SIGNAL OF AND CIRCUIT 30

(D) CURRENT OF TRANSMITTING AND RECEIVING COIL 31

(E) CHANGE-OVER SIGNAL FOR TRANSMITTING AND RECEIVING

## FIG. 8

(A) INDUCTION VOLTAGE OF TRANSMITTING AND RECEIVING-COIL

(B) OUTPUT OF WAVE SHAPING CIRCUIT 33

(C) RESET SIGNAL

(D) CLOCK SIGNAL

(E) DEMODULATED SIGNAL

(F) CHANGE-OVER SIGNAL FOR TRANSMITTING AND RECEIVING

EP 0 125 842 B1

EP 0 125 842 B1

## FIG. 9A

## FIG. 9B

# FIG.10A

**WATCH**　　　　　**CONTROLLER**

```
    ( START )                        ( START )
        │                                │
        ▼                                ▼
     ╱  7b  ╲                        ╱ KEY K1 ╲
     ╲      ╱                        ╲        ╱
        │                                │
        ▼                                ▼
┌──────────────────┐            ┌──────────────────┐
│ CHANGE TRANSMITTING│           │                  │
│ AND RECEIVNG      │            │                  │
│ CIRCUIT TO RECEIVING│          │                  │
│ MODE             │             │                  │
└──────────────────┘            │                  │
        │                       │                  │
        ▼            "C1"       ┌──────────────────┐
┌──────────────┐ ◄──────────────│ TRANSMIT DISPLAY │
│   RECEIVE    │                │ CONTROL REQUEST  │
└──────────────┘                │ CODE             │
        │                       └──────────────────┘
        ▼                                │
┌──────────────────┐            "ACK"    │
│ SET TO BE CONDUCTED│ ─────────────────►│
│ DISPLAY CONTROL  │                     │
│ BY CONTROLLER    │                     │
└──────────────────┘                     │
                                          ▼
              DATA                 ┌──────────────┐
        ┌──────────────┐ ◄─────────│              │
        │              │   "C2"    │  TRANSMIT    │
        │  DISPLAY     │ ◄─────────│  MENU DATA   │
        │  MENU        │ DISPLAY ADDRESS          │
        │              │ ◄─────────│              │
        │              │   XMT     │              │
        │              │ ◄─────────└──────────────┘
        └──────────────┘                 │
                                          ▼
                                      ╱ KEY ╲
                                      ╲     ╱
                                         │
                                         ▼  [EDIT]
                                    TO FIG.10B
```

DATA DISPLAY MODE 1

EP 0 125 842 B1

# FIG.10B

FROM FIG. 10A

DATA TRANSMITTINIG MODE 1

TRANSMIT MEMO DATA REQUEST CODE

"C3"

"ACK"

RECEIVE

SET TO RECEIVING MODE

TRANSMIT MEMO DATA IN RAM 22

DATA

RECEIVE MEMO DATA AND STORE MEMO DATA IN RAM 12

DATA DISPLAY MODE 2

RECEIVE

"C1"

TRANSMIT DISPLAY CONTROL REQUEST CODE

SET TO BE CONDUCTED DISPLAY CONTROL BY CONTROLLER

"ACK"

RECEIVE

DATA

"C2"

DISPLAY ADDRESS

XMT

TRANSMIT DISPLAY MEMO DATA

TO FIG.10C

TO FIG.10C

EP 0 125 842 B1

# FIG. 10C